# FASCICULE DE BREVET EUROPEEN

(11) **EP 0 430 761 B1**
(45) Date de publication et mention de la délivrance du brevet: **03.05.1995**
(21) Numéro de dépôt: 90403271.1
(22) Date de dépôt: 20.11.1990
(51) Int. Cl.: B29C 65/34, F16L 47/02, B29L 31/24

(54) **Procédé et pièce de raccordement utilisant une résistance électrique pour le soudage d'éléments en matière plastique**
Verfahren und Verbindungsteil mit einem elektrischen Widerstand zum Verschweissen von Elementen aus thermoplastischem Material
Process and joining element using an electrical resistance for joining plastic parts

(30) Priorité: 29.11.1989 FR 8915706
(43) Date de publication de la demande: 05.06.1991
(73) Titulaire: GAZ DE FRANCE (SERVICE NATIONAL), F-75017 Paris (FR)
(72) Inventeur: Dufour, Denis, F-95170 Deuil la Barre (FR); Fortin, François, F-75002 Paris (FR)
(74) Mandataire: Lerner, François

(56) Documents cités:
- EP-A- 0 093 821
- CH-A- 408 177
- CH-A- 532 996
- DE-A- 3 605 186
- DE-B- 1 076 356
- FR-A- 585 195
- FR-A- 2 211 607
- FR-A- 2 301 361
- US-A- 4 208 645
- US-A- 4 306 213
- US-A- 4 540 970

## Description

La présente invention concerne l'assemblage de pièces constituées au moins partiellement en matériau thermofusible.

Actuellement, de tels assemblages sont essentiellement réalisés par thermosoudage voir par exemple DE-B-1076356. Et cette technique est largement employée notamment dans l'industrie gazière pour l'établissement de jonctions entre tubes dans les réseaux de distribution, (en particulier tubes en polyéthylène de densité supérieure à 925 kg/m³ environ).

Selon un procédé aujourd'hui très répandu, les pièces à réunir, en général des tubes, sont assemblées au moyen d'une pièce de raccordement.

Quelle que soit la nature de cette pièce (manchon, prise de branchement...), celle-ci comporte de façon habituelle, noyée dans son épaisseur, une résistance électrique de chauffage consistant généralement en un fil électriquement conducteur bobiné disposé à proximité de la surface de la pièce qui doit venir en vis-à-vis de celle du (des) tube(s).

L'opération de soudage est réalisée en plaçant en vis à vis la partie des pièces à souder et en raccordant le fil électrique bobiné à une source électrique (telle qu'une source de courant alternatif redressé) qui, par effet joule, va échauffer la résistance et provoquer le ramollissement jusqu'à fusion de la matière plastique environnante des pièces, réalisant ainsi le soudage.

Pour que ce soudage soit de bonne qualité, c'est-à-dire pour obtenir une jonction étanche aux fluides gazeux et une résistance mécanique satisfaisante, le temps de chauffage doit être compris entre une durée minimale permettant d'obtenir après refroidissement un soudage correct entre les pièces, et une durée maximale inférieure à celle susceptible de provoquer une dégradation thermique des pièces. Avec les résistances actuelles du type fil électrique bobiné, on a remarqué que dans un certain nombre de cas la fusion et la mise en pression consécutive de la matière plastique des pièces induisent des contacts entre spires avec création de court-circuits, propres à induire justement des dégradations thermiques de la matière.

Dans les systèmes de soudage actuels certains défauts de jonction peuvent également survenir, compte tenu de la relative imprécision des principes utilisés pour la détermination de la durée optimale du chauffage correspondant au "temps de soudage", c'est-à-dire à la durée pendant laquelle la résistance électrique va être alimentée en courant électrique.

Lorsque le temps de soudage est défini automatiquement, l'arrêt du soudage est souvent obtenu à l'aide de capteurs que l'on dispose dans des puits ménagés dans la pièce de raccordement en des endroits localisés de la zone de soudage et à une distance non négligeable du fil électrique bobiné de chauffage. Compte tenu de l'espacement entre ces puits, de leur disposition et de la relativement faible conductivité thermique des matières plastiques employées, si des court-circuits surviennent, ceux-ci ne peuvent au mieux qu'être détectés avec un certain retard.

On notera également que la réalisation d'un raccord électrosoudabe avec un fil bobiné intégré nécessite une étape longue et délicate de bobinage du fil.

La présente invention a pour but de remédier en particulier aux inconvénients sus-mentionnés, par l'utilisation d'un élément chauffant constitué autour d'une mince couche ou feuille électriquement conductrice adaptée pour se rompre à une température optimum et pouvant être déposée sur un film polymère de préférence de nature différente du polymère plastique constituant les pièces à assembler.

Conformément à l'invention, on va donc remplacer le classique fil électrique bobiné par une feuille résistive "noyée" dans le raccord électrosoudable et jouant le rôle de fusible à la température de soudage.

Outre cela, l'invention a également pour objet un procédé destiné à réunir par soudage une pièce de raccordement et au moins une autre pièce, chacune d'elles comprenant un corps en matière plastique thermofusible, ce procédé consistant
- à placer en vis-à-vis lesdites pièces qui présentent des surfaces contiguës définissant une zone de soudage,
- à prévoir à l'intérieur de la pièce de raccordement, un trajet pour la circulation d'un courant électrique dans la zone de soudage, à proximité desdites surfaces contiguës des pièces,
- à faire circuler un courant électrique le long dudit trajet pour chauffer les pièces à l'endroit de ladite zone de soudage, jusqu'à une température conduisant à leur soudage,
Ce procédé se caractérisant, selon l'invention, en ce qu'il consiste en outre:
- à prévoir en tant que trajet pour la circulation du courant électrique une couche ou feuille de matière électriquement conductrice intégrée à ladite pièce de raccordement et susceptible de se rompre à une température déterminée sensiblement égale à ladite température de soudage,
- et à faire circuler ce courant dans ladite feuille jusqu'à provoquer une fente continue en travers de celle-ci avec discontinuité de matière de la feuille, induisant l'arrêt du chauffage par interruption du courant.

On notera dès à présent que l'expression "température de soudage" devra être interprétée comme définissant la température que doivent atteindre les pièces à réunir à l'endroit de leur zone de soudage (c'est-à-dire à proximité de leur interface de jonction) pour que, pendant la durée du chauffage, ces pièces entrent localement en fusion et qu'après arrêt de ce chauffage et refroidissement, ces mêmes pièces soient réunies de façon sensiblement étanche aux gaz, ceci avec une résistance mécanique compatible avec leur utilisation.

D'autres explications, caractéristiques et avantages de l'invention apparaîtront encore de la description qui va suivre faite en référence aux dessins d'accompagnement dans lesquels:
- la figure 1 est une vue schématique en coupe transversale médiane d'un système de raccordement conforme à l'invention utilisant un manchon pour la liaison bout à bout de deux tubes,
- la figure 2 est une vue schématique en perspective d'une possible réalisation de l'élément résistif imagé dans l'invention,
- la figure 3 est une illustration en coupe transversale médiane d'une variante de réalisation du système illustré sur la figure 1 utilisant en l'espèce une prise de branchement pour un raccordement transversal sur un tube,
- et la figure 4 est une vue locale agrandie d'une variante de réalisation de l'élément résistif illustré sur la figure 2.

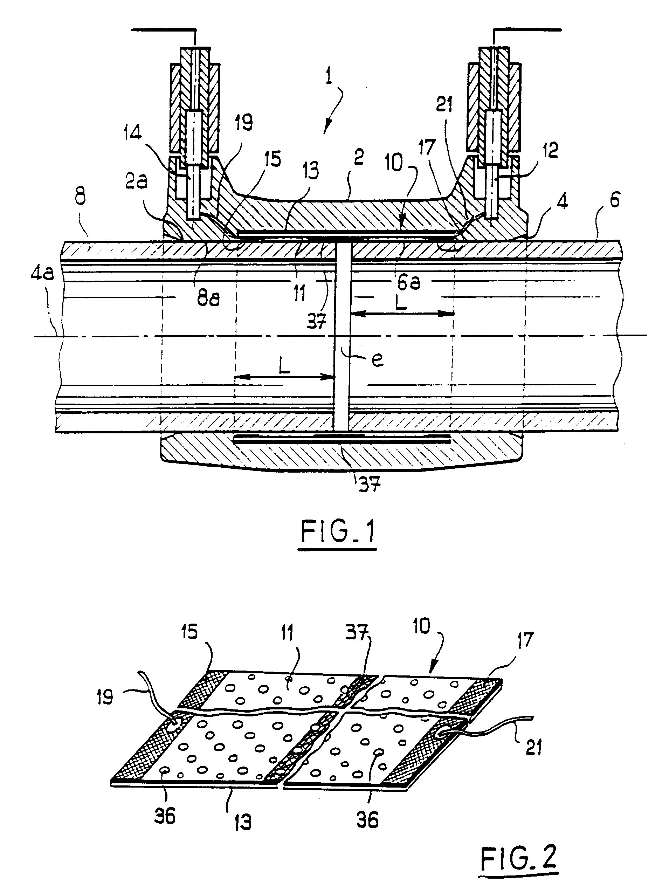

Si l'on se reporte tout d'abord à la figure 1, on voit donc illustré un raccord électrosoudable repéré dans son ensemble 1 comprenant un manchon de raccordement 2 pourvu d'un corps en matière plastique thermofusible dont l'orifice central 4 qui le traverse de part en part est propre à recevoir, pour les raccorder, deux tubes sensiblement coaxiaux 6, 8 d'un diamètre extérieur légèrement inférieur au diamètre de l'orifice 4 du manchon.

Les deux tubes 6, 8 sont engagés à l'intérieur de l'orifice 4 du manchon par l'une de leurs extrémités. Ces tubes s'étendent sur une longueur l et le long des surfaces 6a, 8a, en regard d'une zone de ce manchon (dite zone de soudage). Cette zone est limitée par la surface extérieure contiguë 2a et comprend une résistance électrique de chauffage 10 reliée par deux bornes de connexion 12, 14 à une source d'énergie électrique (non représentée), telle qu'une source de courant alternatif redressé.

Parmi les matières plastiques utilisables pour réaliser le corps du manchon et les tubes à réunir, on peut notamment citer le polyéthylène, le polyamide, le polybutylène et le polypropylène.

Selon l'invention, et comme on peut le constater à la vue des figures, la résistance électrique de chauffage consiste en une couche ou feuille de matière électriquement conductrice 11. La feuille 11 peut être formée, notamment par dépôt avec pulvérisation sous vide, sur un film support 13 en matière plastique thermofusible.

De préférence, la matière plastique constitutive du film support 13 sera différente de celle de la pièce de raccordement 2 et des tubes. Plus précisément, il sera d'une façon générale préférable d'utiliser pour le film 13 une matière plastique ayant un point de fusion supérieur à celui de la matière plastique des tubes et du corps de la pièce de raccordement. En outre, on préfèrera choisir pour ce film une matière ayant, lorsque le film est encore à l'état solide, un coefficient de dilatation thermique intermédiaire entre celui de la couche conductrice 11 (état solide) et celui des tubes et du manchon (état fondu).

Dans ce cas, en choisissant une couche en matière électriquement conductrice 11 susceptible de fondre sensiblement à la température de soudage des pièces, on pourra assurer une bonne autorégulation du soudage. En effet, tant que la circulation du courant dans la couche n'élèvera pas la température du film jusqu'à sa température de fusion, le courant circulera normalement et les pièces seront chauffées. Mais dès que la température de ramollissement puis de fusion de la matière qui constitue le film support sera atteinte, celui-ci se dilatera, provoquant tout d'abord des criques dans la couche conductrice puis l'apparition d'une fente continue en travers et sur toute l'épaisseur de cette couche, avec pour conséquence l'arrêt du chauffage par interruption du courant.

Bien entendu, l'utilisation d'un tel système présente divers avantages par rapport au fil bobiné conducteur classique, et notamment:
- l'élimination des risques de court-circuits,
- un chauffage plus uniforme des pièces, dans la mesure où la surface d'échange thermique entre l'élément chauffant et les pièces à assembler est nettement accrue,
- une réduction du coût de réalisation des pièces de raccordement, lesquelles ne nécessitent plus l'utilisation de capteurs annexes,
- une meilleure localisation du flux de chauffage au voisinage de l'interface de soudage, dans la mesure où l'épaisseur de la feuille conductrice peut être de l'ordre de quelques centaines d'Angström, alors que le diamètre d'un fil conducteur est typiquement de l'ordre du millimètre,
- enfin, l'utilisation d'une telle couche résistive rend possible la réalisation d'un raccord réellement autorégulé, puisqu'il définit lui-même le temps pendant lequel il y a circulation du courant, ceci à proximité immédiate de la zone de soudage, et donc dans les meilleures conditions possibles de fiabilité et d'efficacité.

Comme on le comprend, la réalisation d'une résistance chauffante de ce type a necessité la prise en considération de différents paramètres, à savoir en particulier:
- la nature de la matière conductrice (en général un métal) composant la couche mince 11,
- l'épaisseur de cette couche,
- si nécessaire, l'épaisseur et la nature du film en matière plastique constituant le film support 13,
- les dimensions et la géométrie de l'élément chauffant dans son ensemble.

Une fois ces différents choix effectués, il a ensuite fallu réaliser des contacts électriques fiables et industriellement réalisables, permettant d'alimenter convenablement en courant électrique l'élément chauffant ainsi réalisé.

Intéressons-nous successivement à ces différents critères.

### a) Nature du matériau conducteur utilisé, épaisseur de la feuille métallique et géométrie de l'élément chauffant:

Ces différents paramètres doivent être choisis de manière à obtenir une résistance permettant d'atteindre, dans la zone de soudage des pièces, la température de soudage appropriée.

Pour un assemblage entre un manchon en polyéthylène et des tubes également en polyéthylène, il faut dans la pratique atteindre au voisinage des surfaces contiguës de jonction des pièces (repérées respectivement 2a; 6a et 8a sur la figure 1), des températures comprises entre environ 150 et 350 à 400°C, et ce pendant un intervalle de temps de l'ordre de quelques minutes. Connaissant la tension de soudage et la résistance électrique de l'élément chauffant, c'est la puissance électrique dissipée dans l'assemblage qui déterminera les vitesses de montée en température.

Le temps de chauffage ne sera donc pas un paramètre prédéterminé.

La résistance de l'élément chauffant étant fonction de la résistivité électrique du métal utilisé, de l'épaisseur de la couche conductrice, de la section de passage du courant dans la couche et de la distance séparant les contacts électriques, on pourra aisément calculer l'épaisseur de la couche métallisée et choisir la nature du métal conducteur, de manière à obtenir la valeur de la résistance électrique permettant d'atteindre les températures souhaitées, sachant que dans l'industrie gazière notamment, on utilise habituellement une tension de soudage de l'ordre de 39 volts.

D'une façon générale, l'épaisseur de la couche conductrice sera comprise entre environ 10⁻⁸ et 10⁻⁷ m. Et le matériau conducteur constituant cette couche sera avantageusement choisi de telle sorte que sa température de fusion soit supérieure à celle de la matière plastique du film support.

En ce qui concerne la géométrie de l'élément chauffant, celle-ci variera bien entendu en fonction de l'application souhaitée.

Dans le cas de la figure 1, c'est-à-dire pour une jonction bout à bout de deux tubes par manchon, partant d'un feuillet parallélépipédique 10 (tel qu'illustré sur la figure 2), on a réalisé un manchon dans l'épaisseur duquel a été noyé ce feuillet résistif, lequel présente ici la forme d'un cylindre d'axe sensiblement confondu avec celui 4a de l'orifice central 4 du manchon. Compte tenu de la constitution de cet élément résistif, celui-ci a pu être intégré à proximité tout à fait immédiate de la surface intérieure 2a du raccord, au plus près donc des surfaces extérieures de jonction 6a, 8a en regard des deux tubes.

Mais d'autres réalisations pourraient être envisagées.

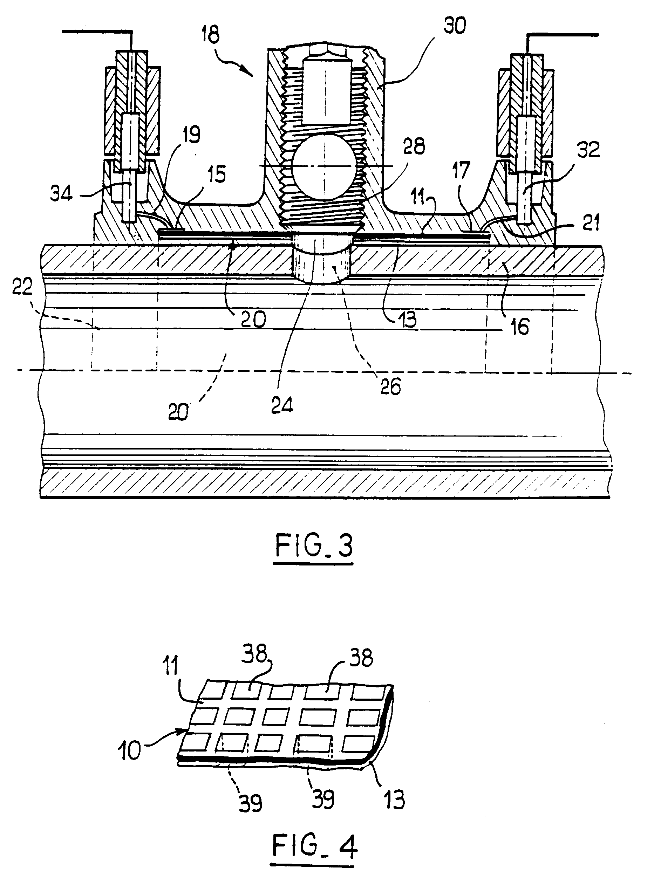

Par exemple, dans le cas (illustré sur la figure 3) du raccordement d'un tube tel que 16 et d'une prise de branchement telle que 18 qui recouvre localement le tube par l'intermédiaire d'une selle 22, la couche résistive repérée 20, constituée comme précédemment, présente une forme en plan sensiblement parallélépipédique rectangulaire recourbée à la manière d'une selle. Après soudage et refroidissement des pièces, un orifice central 24 correspondant à l'orifice 26 du tube par lequel celui-ci communique avec le passage intérieur 28 du fût 30 de la prise de branchement est réalisé à travers la résistance 20 (film plastique + couche conductrice).

Bien entendu, la couche résistive 20 est comme précédemment reliée à deux bornes de connexion telles que 32 et 34 pour son alimentation en énergie électrique.

Quelle que soit l'application retenue, on préfèrera pour assurer une résistance mécanique de l'assemblage de part et d'autre de l'élément résistif, percer la couche électriquement conductrice et le film support de manière que l'élément présente des orifices ou des jours 36 (figure 2) qui le traversent de part en part, ces orifices étant, une fois la pièce de raccordement réalisée, remplis par la matière plastique de cette pièce, permettant ainsi d'assurer une continuité locale de la matière.

Tel qu'illustré figure 4, on peut également envisager que la couche conductrice 11 se présente sous la forme d'une grille métallique ou d'un corps ajouré réalisé à la manière d'un réseau maillé conducteur déposé en couche mince sur le film support, les mailles 38 ou jours de la grille ou du réseau étant là encore remplis par la matière plastique de la pièce de raccordement, de même que les orifices 39 qui auront été ménagés en correspondance à travers le film support 13.

### b) Choix du film support:

Comme on l'a compris, le film support 13 de la couche électriquement conductrice a pour fonction, s'il est prévu, d'interrompre le chauffage des pièces par déchirure de la couche 11 que l'on a déposé sur lui.

Dans la pratique, cette rupture sera provoquée par la fusion avec mise sous pression du film support.

De ce fait, on choisira pour le film une matière plastique thermofusible ayant un point de fusion tel que la dilatation du film n'entraîne la déchirure de la couche conductrice 11 qu'au moment où la température de soudage aura été atteinte au voisinage de l'interface de jonction des pièces.

Les études qui ont pu être menées jusqu'à présent concernant l'assemblage par thermosoudage de tubes et de pièces de raccordement en polyéthylène, ont permis de montrer que les températures de soudage à atteindre sont de l'ordre de 150 à 250°C pour des vitesses de chauffage de l'ordre de 20 à 100°C/mn.

On sélectionnera donc d'une façon générale, en tant que film support, un film constitué à partir d'une matière polymère ayant une température de fusion au moins supérieure à 200°C environ.

Parmi les polymères envisageables, on peut citer par exemple le polyester, le polyamide 6, les polymères fluorés (par exemple le polytétrafluoroéthylène), le polycarbonate cristallin, le polysulfure de phénylène, et les polyimides.

D'une façon générale, et au moins dans le cas de pièces à réunir réalisées en polyéthylène, on limitera donc le choix à des matières plastiques thermofusibles ayant une température de fusion inférieure à environ 400°C, afin d'éviter tout risque d'endommagement des pièces par surchauffage.

Outre la nature du film support, son épaisseur sera également un élément de choix important. Dans la plupart des applications, celle-ci sera comprise entre environ 5 et 100 »m (soit 5 à 100 x 10⁻⁶ m), et de préférence égale à environ 10 »m.

### c) Réalisation des contacts électriques:

Pour assurer le branchement de l'élément résistif il a fallu réaliser des contacts ohmiques sur la fine pellicule conductrice 11. Pour cela, on a prévu de recourir à des adhésifs électriquement conducteurs, à des rubans ou à des dépôts métalliques en les employant de manière à obtenir des contacts électriques latéraux tels que figurés en 15, 17 sur les figures.

Une fois ces contacts réalisés, on pourra souder les fils électriques 19, 21 de raccordement aux bornes de connexion correspondantes.

### d) Création d'une zone froide:

En particulier dans le cas de la jonction bout à bout de deux tubes via un manchon de raccordement (voir figure 1) il est en outre apparu utile de ménager une "zone froide" en regard des extrémités des tubes en vis-à-vis, afin d'éviter qu'au cours du chauffage ou du soudage de la matière en fusion puisse s'écouler dans l'espace libre e qui sépare les tubes, risquant de les obstruer partiellement.

A cet effet il a été prévu dans l'exemple de la figure 1 de disposer en surface de la couche conductrice 11, une fine barrette 37 électriquement conductrice de protection s'étendant en regard de l'espace e (voir figure 1).

Pour qu'elle assure sa fonction, cette barrette sera réalisée en une matière, de préférence métallique, ayant une température de fusion supérieure à la température de fusion de la matière plastique environnante et des matériaux constituant le film plastique 13, voire la couche conductrice 11.

D'une façon générale l'épaisseur de la barrette sera comprise entre 3 et 5 »m.

Sur la base de ce qui vient d'être dit, différents travaux effectués par le déposant ont permis de définir l'exemple complet (mais non limitatif) qui suit, permettant de réaliser un élément résistif susceptible d'être utilisé sur une pièce de raccordement en polyéthylène, pour la jonction étanche de tubes également en polyéthylène.

### Constitution:

- Film support: Film en polyester d'une épaisseur d'environ 12 »m,
- Couche électriquement conductrice: couche en aluminium d'environ 200 Angström (soit 200 x 10⁻¹⁰ m),
- Géométrie de l'élément chauffant: feuillet de 10 x 10 cm² percés d'orifices lui donnant l'aspect d'un réseau maillé.
- Connexions par rubans adhésifs en cuivre de 30 »m d'épaisseur sur lesquels a été déposée une laque d'argent,
- Puissance de chauffage du feuillet: 0,015 W/mm².

### Résultats

Après environ 200 secondes, la température maximale de la couche métallique est d'environ 200°C.

Le chauffage est interrompu automatiquement par déchirure de la couche métallique, au bout d'environ 250 secondes.

Bien entendu, il doit être clair que tout moyen approprié (autre qu'un film en matière plastique) susceptible, conformément à l'invention, de provoquer une fente dans la feuille mince conductrice à la température choisie pourrait tout à fait être utilisé sans sortir du cadre de l'invention. En particulier il devrait être possible, en adaptant l'épaisseur et la nature de cette feuille conductrice, de s'abstenir d'utiliser le film polymère support 13, la résistance 11 devant alors être conformée pour se rompre par fusion à une température comprise entre la température de fusion de la matière plastique du raccord et des éléments à réunir et une température maximum de dégradation de ces mêmes pièces. En pratique, on constate que la température de dégradation ou de rupture des chaînes moléculaires constituant une pièce est atteinte lorsqu'apparaissent des projections de matière fondue, et/ou des dégagements de fumées. La présence de cavités à l'intérieur des pièces est également le signe d'une telle dégradation, de même que la constatation d'une zone fondue trop profonde avec des risques de fuite au niveau de la soudure.

## Revendications

1. Procédé pour réunir par soudage une pièce de raccordement avec au moins une autre pièce, chacune d'elles comprenant un corps en matière plastique thermofusible, ce procédé consistant:
- à placer en vis-à-vis lesdites pièces (1, 6, 8 ; 16, 18) qui présentent des surfaces contiguës (2a, 6a, 8a) définissant une zone de soudage,
- à prévoir dans ladite pièce de raccordement (1, 18) un trajet (11) pour la circulation d'un courant électrique dans la zone de soudage, à proximité desdites surfaces contiguës des pièces,
- à faire circuler un courant électrique le long dudit trajet pour chauffer les pièces à l'endroit de ladite zone de soudage, jusqu'à une température conduisant à leur soudage,
ce procédé étant caractérisé en ce qu'il consiste en outre
- à prévoir en tant que trajet pour la circulation du courant électrique, une feuille de matière électriquement conductrice (11) intégrée à ladite pièce de raccordement et susceptible de se fendre à une température sensiblement égale à ladite température de soudage,
- et à faire circuler ce courant dans ladite feuille jusqu'à provoquer au moins une fente en travers et sur toute l'épaisseur de celle-ci avec discontinuité de matière de la feuille propre à induire l'interruption du courant.

2. Procédé selon la revendication 1 caractérisé en ce qu'on réalise ladite fente dans la feuille électriquement conductrice (11) en rendant cette feuille solidaire d'un film support polymère thermofusible (13) ayant, sensiblement à ladite température de soudage des pièces, un coefficient de dilatation thermique tel qu'à cette température le film induit une déchirure mécanique de la feuille.

3. Pièce de raccordement pour éléments en matière plastique thermofusible, du type constituée au moins partiellement en matériau thermofusible compatible avec la matière plastique desdits éléments et présentant une surface (2a) pour sa liaison avec une surface correspondante (6a, 8a) des éléments (6, 8), ladite pièce (1, 18) comprenant, dans son épaisseur, une résistance électrique (10) disposée à proximité de ladite surface de liaison pour provoquer la fusion de la matière qui l'entoure et induire le soudage entre ladite pièce et les éléments, caractérisée en ce que la résistance électrique (10) se présente sous la forme d'une feuille de matière (11) électriquement conductrice conformée pour se rompre à une température comprise entre la température de fusion de la matière plastique de ladite pièce et desdits éléments et une température maximum de dégradation de ces mêmes pièce et éléments.

4. Pièce de raccordement selon la revendication 3 caractérisée en ce que la feuille de matière électriquement conductrice (11) est formée sur un film support (13) noyé dans l'épaisseur de la pièce de raccordement (1, 18).

5. Pièce de raccordement selon la revendication 4 caractérisée en ce que la feuille (11) électriquement conductrice et le film support (13) présentent des orifices (36) qui les traversent de part en part, ces orifices étant remplis par la matière plastique de la pièce de raccordement (1, 18), assurant ainsi une continuité de matière.

6. Pièce de raccordement selon la revendication 4 caractérisée en ce que ladite feuille électriquement conductrice (11) se présente sous la forme d'un réseau maillé, et des orifices (39) sont prévus en correspondance des mailles (38) à travers le film support (13), ces orifices et les mailles étant remplis par la matière plastique de la pièce de raccordement, assurant ainsi une continuité de matière.

7. Pièce de raccordement selon l'une quelconque des revendications 4 à 6 caractérisée en ce que la température de fusion du film support (13) est supérieure ou égale à celle de la pièce de raccordement (1, 18) et desdits éléments (6, 8, 16) et inférieure à celle de la feuille (11) électriquement conductrice.

8. Pièce de raccordement selon l'une quelconque des revendications 4 à 7 caractérisé en ce que ledit film polymère (13) duquel la feuille conductrice (10) est solidaire présente un coefficient de dilatation thermique tel qu'à une température de l'ordre de la température de fusion, ce film provoque une rupture mécanique de ladite feuille.

9. Pièce de raccordement selon l'une quelconque des revendications 4 à 8 caractérisée en ce la température de fusion du film support (13) est comprise entre environ 200 et 400°C.

10. Pièce de raccordement selon l'une quelconque des revendications 4 à 9 caractérisée en ce que l'épaisseur du film support (13) est comprise entre environ 5 et 100 X 10⁻⁶ m et est de préférence égale à environ 10 X 10⁻⁶ m.

11. Pièce de raccordement selon l'une quelconque des revendications 4 à 10 caractérisée en ce qu'on utilise en tant que film support (13), un film constitué à partir d'un matériau polymère appartenant à la liste suivante: polyester, polyamide 6, polymères fluorés, polycarbonate cristallin, polysulfure de phénylène, polyimide.

12. Pièce de raccordement selon l'une quelconque des revendications 3 à 11 caractérisée en ce que l'épaisseur de la feuille électriquement conductrice (11) est comprise entre environ 10⁻⁸ et 10⁻⁷ m.

13. Pièce de raccordement selon l'une quelconque des revendications 3 à 12 caractérisée en ce que ladite pièce de raccordement (2) consistant en un manchon et lesdits éléments à réunir (6, 8) consistant en des tubes disposés bout à bout et engagés à l'intérieur dudit manchon (2) ce dernier comprend des barrettes de protection (37) disposées en regard des extrémités d'aboutement des tubes et dont la température de fusion est supérieure à la température de fusion de la matière plastique avoisinante du manchon pour créer une barrière protectrice évitant que la matière fondue s'écoule à l'intérieur des tubes.

## Claims

1. Process for combining a connection part with at least one other part by welding, each comprising a body of heat-meltable plastics material, this process consisting in:
- placing opposite one another the parts (1, 6, 8; 16, 18) which have contiguous surfaces (2a, 6a, 8a) defining a welding area;
- providing in the connection part (1, 18) a path (11) for the passage of an electric current in the welding area, in the vicinity of the contiguous surfaces of the parts;
- passing an electric current along the path in order to heat the parts at the location of the welding area, to a temperature which causes them to be welded;
this process being characterised in that it further consists in:
- providing a sheet (11) of electrically conductive material which is incorporated in the connection part and can split at a temperature which is substantially equal to the welding temperature as a path for passing the electric current; and
- passing this current in the sheet until it produces at least one slot across and throughout the thickness of the sheet with discontinuity of the sheet material likely to interrupt the current.

2. Process according to Claim 1, characterised in that the slot is formed in the electrically conductive sheet (11) by rendering this sheet integral with a heat-meltable polymer support film (13) substantially having a coefficient of thermal expansion at the welding temperature of the parts such that the film causes the sheet to tear mechanically at this temperature.

3. Connection part for components made of heat-meltable plastics material, of the type consisting at least partially of heat-meltable material which is compatible with the plastics material of the components and having a surface (2a) for its connection to a corresponding surface (6a, 8a) of the components (6, 8), the part (1,18) comprising in its thickness an electrical resistor (10) disposed in the vicinity of the connection surface in order to bring about the melting of the material which surrounds it and lead to the welding between the part and the components, characterised in that the electrical resistor (10) is in the form of a sheet (11) of electrically conductive material formed so as to break at a temperature which is between the melting temperature of the plastics material of the part and of the components and a maximum degradation temperature of the same part and the same components.

4. Connection part according to Claim 3, characterised in that the sheet (11) of electrically conductive material is formed on a support film (13) embedded in the thickness of the connection part (1, 18).

5. Connection part according to Claim 4, characterised in that the electrically conductive sheet (11) and the support film (13) have apertures (36) which pass therethrough from one side to the other, these apertures being filled by the plastics material of the connection part (1, 18) thus ensuring material continuity.

6. Connection part according to Claim 4, characterised in that the electrically conductive sheet (11) is in the form of a meshed network, and the apertures (39) are provided in correspondence with the meshes (38) through the support film (13), these apertures and the meshes being filled by the plastics material of the connection part, thus ensuring material continuity.

7. Connection part according to any one of Claims 4 to 6, characterised in that the melting temperature of the support film (13) is greater than or equal to that of the connection part (1, 18) and of the components (6, 8, 16) and lower than that of the electrically conductive sheet (11).

8. Connection part according to any one of Claims 4 to 7, characterised in that the polymer film (13) with which the conductive sheet (10) is integral has a coefficient of thermal expansion such that this film causes mechanical breakage of the sheet at a temperature of the order of the melting temperature.

9. Connection part according to any one of Claims 4 to 8, characterised in that the melting temperature of the support film (13) is between approximately 200 and 400°C.

10. Connection part according to any one of Claims 4 to 9, characterised in that the thickness of the support film (13) is between approximately 5 and 100 x 10⁻⁶ m and is preferably approximately 10 x 10⁻⁶ m.

11. Connection part according to any one of Claims 4 to 10, characterised in that a film consisting of a polymer material taken from the following list: polyester, polyamide 6, fluorine-containing polymers, crystalline polycarbonate, phenylene polysulphide, polyimide, is used as support film (13).

12. Connection part according to any one of Claims 3 to 11, characterised in that the thickness of the electrically conductive sheet (11) is between approximately 10⁻⁸ and 10⁻⁷m.

13. Connection part according to any one of Claims 3 to 12, characterised in that, since the connection part (2) consists of a sleeve and the components (6, 8) to be connected consist of tubes disposed end to end and engaged inside the sleeve (2), the latter comprises protection bars (37) which are disposed opposite the tube joining ends and of which the melting temperature is greater than the melting temperature of the adjacent plastics material of the sleeve in order to create a protective barrier preventing the molten material flowing inside the tubes.

## Patentansprüche

1. Verfahren zum Verbinden eines Verbindungsstückes mit mindestens einem anderen Stück durch Schweißen, wobei jedes von ihnen einen Körper aus thermoschmelzbarem Kunststoffmaterial aufweist, wobei das Verfahren darin besteht, daß:
- man die Teile (1, 6, 8; 16, 18) gegenüber anordnet, die benachbarte Oberflächen (2a, 6a, 8a) aufweisen, wobei sie eine Schweißzone bilden,
- man in dem Verbindungsstück (1, 18) einen Weg (11) für das Zirkulieren eines elektrischen Stromes in der Schweißzone in der Nähe der benachbarten Oberflächen der Stücke vorsieht,
- man einen elektrischen Strom längs des Weges zirkulieren läßt, um die Stücke in der Nähe der Schweißzone bis auf eine Temperatur zu erhitzen, die zu ihrem Schweißen führt,
wobei das Verfahren dadurch gekennzeichnet ist, daß es außerdem darin besteht, daß
- man als Weg für die Zirkulation des elektrischen Stromes ein Blatt (11) aus elektrisch leitendem Material vorsieht, welches in dem Verbindungsstück eingefügt ist und geeignet ist, sich bei einer Temperatur zu spalten, die im wesentlichen gleich der Schweißtemperatur ist,
- und daß man den Strom in diesem Blatt zirkulieren läßt, bis man mindestens einen Spalt quer über das Blatt und über die ganze Dicke desselben mit Unterbrechung des Blattmateriales hervorruft, was geeignet ist, die Unterbrechung des Stromes zu bewirken.

2. Verfahren nach Anspruch 1, dadurch gekennzeichnet, daß man den Spalt in dem elektrisch leitenden Blatt (11) ausführt, indem man dieses Blatt formschlüssig mit einem polymeren, thermoschmelzbaren Stützfilm (13) versieht, der im wesentlichen bei der Schweißtemperatur der Stücke einen Wärmedehnungskoeffizienten hat, der Art, daß bei dieser Temperatur der Film einen mechanischen Riß des Blattes bewirkt.

3. Verbindungsstück für Elemente aus thermoschmelzbarem Kunststoffmaterial, welches mindestens teilweise aus thermoschmelzbarem Material besteht, das mit dem Kunststoffmaterial der Elemente verträglich ist und welches eine Oberfläche (2a) für seine Verbindung mit einer entsprechenden Oberfläche (6a, 8a) der Elemente (6, 8) aufweist, wobei das Stück (1, 18) in seiner Dicke einen elektrischen Widerstand (10) beinhaltet, der in der Nähe der Verbindungsoberfläche angeordnet ist, um das Schmelzen des Materiales hervorzurufen, welches es umgibt, und um das Schweißen zwischen dem Stück und den Elementen zu bewirken, dadurch gekennzeichnet, daß der elektrische Widerstand (10) sich in der Form eines Blattes (11) aus elektrisch leitendem Material darstellt, welches gebildet ist, um bei einer Temperatur zu brechen, welche zwischen der Schmelztemperatur des Kunststoffmateriales des Stückes und der Elemente und einer maximalen Schadhaftigkeitstemperatur dieser selben Stücke und Elemente angenommen ist.

4. Verbindungsstück nach Anspruch 3, dadurch gekennzeichnet, daß das Blatt (11) aus elektrisch leitendem Material auf einem Stützfilm (13) gebildet ist, der in der Dicke des Verbindungsstückes (1, 18) versenkt ist.

5. Verbindungsstück nach Anspruch 4, dadurch gekennzeichnet, daß das elektrisch leitende Blatt (11) und der Stützfilm (13) Öffnungen (36) aufweisen, die sie vollkommen durchqueren, wobei die Öffnungen durch das Kunststoffmaterial des Verbindungsstückes (1, 18) gefüllt sind, um so eine Kontinuität des Materials sicherzustellen.

6. Verbindungsstück nach Anspruch 4, dadurch gekennzeichnet, daß sich das elektrisch leitende Blatt (11) in der Form eines Maschengitters darstellt, und entsprechend den Maschen (38) Öffnungen (39) quer durch den Stützfilm (13) vorgesehen sind, wobei die Öffnungen und die Maschen durch das Kunststoffmaterial des Verbindungsstückes gefüllt sind, wodurch so eine Kontinuität des Materials sichergestellt wird.

7. Verbindungsstück nach einem der Ansprüche 4 bis 6, dadurch gekennzeichnet, daß die Schmelztemperatur des Stützfilmes (13) höher oder gleich der des Verbindungsstückes (1, 18) und der Elemente (6, 8, 16) und niedriger als die des elektrisch leitenden Blattes (11) ist.

8. Verbindungsstück nach einem der Ansprüche 4 bis 7, dadurch gekennzeichnet, daß der polymere Film (13), mit dem das leitende Blatt (10) formschlüssig verbunden ist, einen Wärmedehnungskoeffizienten aufweist, der Art, daß dieser Film bei einer Temperatur in der Größenordnung der Schmelztemperatur einen mechanischen Bruch des Blattes hervorruft.

9. Verbindungsstück nach einem der Ansprüche 4 bis 8, dadurch gekennzeichnet, daß die Schmelztemperatur des Stützfilmes (13) zwischen ungefähr 200°C und 400°C angenommen wird.

10. Verbindungsstück nach einem der Ansprüche 4 bis 9, dadurch gekennzeichnet, daß die Dicke des Stützfilmes (13) zwischen ungefähr 5 und 100 x 10⁻⁶ m beträgt und vorzugsweise gleich ungefähr 10 x 10⁻⁶ m beträgt.

11. Verbindungsstück nach einem der Ansprüche 4 bis 10, dadurch gekennzeichnet, daß man als Stützfilm (13) einen Film benutzt, der aus einem Polymerenmaterial aus der folgenden Aufzählung besteht: Polyester, Polyamid 6, fluorierte Polymere, kristallines Polycarbonat, Polyphenylenpolysulfid, Polyimid.

12. Verbindungsstück nach einem der Ansprüche 3 bis 11, dadurch gekennzeichnet, daß die Dicke des elektrisch leitenden Blattes (11) zwischen ungefähr 10⁻⁸ und 10⁻⁷ m beträgt.

13. Verbindungsstück nach einem der Ansprüche 3 bis 12, dadurch gekennzeichnet, daß das Verbindungsstück (2) aus einer Muffe besteht und die zu verbindenden Elemente (6, 8) aus Rohren bestehen, die Ende an Ende angeordnet sind und im Inneren der Muffe (2) in Eingriff stehen, wobei die Muffe (2) Schutzstege (37) aufweist, die gegenüber den Verbindungsenden der Rohre angeordnet sind und deren Schmelztemperatur höher ist als die Schmelztemperatur des Plastikmaterials der benachbarten Manschette, um eine Schutzbarriere zu bilden, die verhindert, daß das geschmolzene Material in das Innere der Rohre fließt.
